# EUROPÄISCHE PATENTANMELDUNG

(11) **EP 1 388 446 A2**
(43) Veröffentlichungstag der Anmeldung: **11.02.2004**
(21) Anmeldenummer: 03016743.1
(22) Anmeldetag: 23.07.2003
(51) Int. Cl.: B60J 3/02, B60R 13/02

(54) **Innenschale für Fahrzeugkarosserien**

(30) Priorität: 09.08.2002 DE 10236595
(71) Anmelder: ArvinMeritor GmbH, 63128 Dietzenbach (DE)
(72) Erfinder: Böhm, Horst, 60599 Frankfurt (DE); Grimm, Rainer, 60599 Frankfurt (DE)
(74) Vertreter: Oppermann, Mark, Dipl.-Ing.

(57) **Zusammenfassung**

Es wird eine aus einem Schaumkunststoff geformte Innenschale (10) für Fahrzeugkarosserien, insbesondere ein Fahrzeugdach oder Fahrzeugdachmodul (12), offenbart, der wenigstens eine Klappe (14) zugeordnet ist, die wahlweise von einer Nichtgebrauchslage in eine Gebrauchslage und umgekehrt bewegbar ist. Vorzugsweise dient die Klappe (14) als Sonnenblende und/oder ermöglicht den Zugang zu einem Funktionselement (44) und/oder Hohlraum (16). Erfindungsgemäß ist die Klappe (14) als Teil der Innenschale (10) ausgebildet und schließt in ihrer Nichtgebrauchslage im wesentlichen oberflächenbündig mit den an die Klappe (14) angrenzenden Bereichen der Innenschale (10) ab. Im Ergebnis wird eine u.a. sehr platzsparende Ausbildung der Klappenanordnung erzielt.

## Beschreibung

Die vorliegende Erfindung bezieht sich auf eine Innenschale bzw. ein Innenverkleidungsteil für Fahrzeugkarosserien entsprechend dem Oberbegriff des Patentanspruchs 1. Insbesondere bezieht sich die Erfindung auf ein Fahrzeugdachmodul, dessen Innenschale wenigstens eine als Sonnenblende dienende Klappe zugeordnet ist.

Solche modulartig einbaufertig vorgefertigte Fahrzeugdächer werden getrennt von der Fahrzeugkarosserie fertiggestellt und erst am Montageband in der Automobilfabrik mit der Fahrzeugkarosserie vereinigt. Insbesondere wegen der erheblichen Verkürzung der Montagezeit am Montageband gewinnen solche Fahrzeugdachmodule in der Massenfertigung zunehmend an Bedeutung. Obgleich nachfolgend durchgehend von einem Fahrzeugdachmodul die Rede sein wird, dessen Innenschale wenigstens eine als Sonnenblende dienende Klappe zugeordnet ist, sind erfindungsgemäß ausgebildete Innenschalen grundsätzlich für alle Flächenbereiche von Fahrzeugkarosserien, einschließlich der Hauben, Türen und Klappen/Deckel, und unabhängig davon, ob es sich bei dem jeweiligen Flächenbereich nun um einen festen Karosseriebestandteil oder ein Modulteil handelt, geeignet, an deren Innenseite ein klappenartiges Element vorgesehen ist, das wahlweise geöffnet bzw. geschlossen werden kann, um etwa den Zugang zu Funktionselementen am jeweiligen Teil zu gestatten, bei denen es sich um Befestigungselemente, Schlösser, Antriebselemente, wie Elektromotoren, Getriebe oder Seilzüge für Fensterheber, elektrische Bauteile, z.B. Lampen, Antennen oder Lautsprecher, oder dergleichen Funktionselemente handeln kann. Auch können solche Klappen wahlweise Hohlräume verschließen, die etwa der Aufnahme von Sonnenbrillen, Garagentoröffnern, etc. dienen. Insofern handelt es sich bei einem Fahrzeugdachmodul mit Sonnenblendenanordnung zwar um den näher beschriebenen Anwendungsort bzw. -fall der Erfindung, jedoch ohne darauf einschränkende Bedeutung.

Aus der gattungsbildenden DE 199 59 812 A1 der Anmelderin ist eine Sonnenblendenanordnung an einem Dachmodul für Kraftfahrzeuge bekannt, das sandwichartig und an seiner aus Schaumkunststoff geformten Innenschale als Dachhimmel ausgebildet, getrennt von der Fahrzeugkarosserie hergestellt, mit seinen Außenrändern auf einen Karosserierahmen auflegbar und mit diesem fest verbindbar ist. Dabei ist die Innenschale im Bereich ihrer zur Auflage auf den Karosserierahmen vorgesehenen Außenränder in zwei Schichten aufgeteilt, von denen die obere Schicht auf den Karosserierahmen auflegbar ist, während die untere Schicht nach unten umbiegbar und zur Verkleidung des Karosserierahmens ausgebildet ist. Ferner ist die untere Schicht im Bereich des vorderen Querholms des Karosserierahmens mit vormontierten Sonnenblenden versehen, welche schwenkbar an Lagerelementen angebracht sind, die mit der unteren Schicht verbunden sind. Durch die Lagerelemente sind Befestigungsmittel hindurchführbar, welche die Lagerelemente und die untere Schicht am vorderen Querholm des Karosserierahmens befestigen. Um die Vormontagemöglichkeiten für die Sonnenblenden an der Innenschale zu verbessern und dabei zusätzlich zur Schwenkbewegbarkeit der Sonnenblenden auch noch eine Drehbarkeit an jeweils einem der Lagerelemente vorzusehen, ist gemäß diesem Stand der Technik für jede Sonnenblende ein Drehlager als Lagerelement in die untere Schicht der Innenschale eingeschäumt, welches zur Aufnahme eines Lagerbolzens ausgebildet ist, mit welchem die Sonnenblende außerhalb des Drehlagers schwenkbar verbunden ist.

Durch die bei diesem Stand der Technik für die Sonnenblende vorgesehenen Bewegungsfreiheitsgrade ist es zwar möglich, die Sonnenblende sehr flexibel im Hinblick auf die gewünschte Abschattung des Fahrzeuginnenraums einzustellen. Dies bedingt hier jedoch auch einen Aufbau, der in Fahrzeughöhenrichtung relativ dick ist. Für bestimmte Anwendungsfälle, insbesondere für unter aerodynamischen Gesichtspunkten optimierte, relativ flache Dachformen, ist es aber erwünscht, eine möglichst dünne Sonnenblendenanordnung zu erzielen, damit der Blickwinkel des Fahrers möglichst wenig eingeschränkt wird.

Demgemäß liegt der Erfindung die Aufgabe zugrunde, eine Innenschale für Fahrzeugkarosserien, der wenigstens eine wahlweise zwischen einer Nichtgebrauchslage und einer Gebrauchslage bewegbare Klappe zugeordnet ist, derart weiterzubilden, daß die Klappenanordnung möglichst platzsparend ausgebildet ist.

Diese Aufgabe wird durch die im kennzeichnenden Teil des Patentanspruchs 1 angegebenen Merkmale gelöst. Vorteilhafte und/oder zweckmäßige Weiterbildungen der Erfindung sind Gegenstand der Patentansprüche 2 bis 18.

Bei einer aus einem Schaumkunststoff geformten Innenschale für Fahrzeugkarosserien, insbesondere ein Fahrzeugdach oder Fahrzeugdachmodul, der wenigstens eine Klappe zugeordnet ist, die wahlweise von einer Nichtgebrauchslage in eine Gebrauchslage und umgekehrt bewegbar ist, wobei die Klappe vorzugsweise als Sonnenblende dient und/oder den Zugang zu einem Funktionselement und/oder Hohlraum ermöglicht, ist die Klappe erfindungsgemäß als Teil der Innenschale ausgebildet und schließt in ihrer Nichtgebrauchslage im wesentlichen oberflächenbündig mit den an die Klappe angrenzenden Bereichen der Innenschale ab.

Im Ergebnis steht die Klappe in ihrer Nichtgebrauchslage nicht oder allenfalls nur sehr geringfügig über die Innenschale in Dickenrichtung vor, so daß sie insbesondere in ihrer Verwendung als Sonnenblende an einem Fahrzeugdach bzw. -modul den Blickwinkel des Fahrers nicht zusätzlich einschränkt und ferner der Fahrzeuginnenraum im Hinblick auf eine maximale Kopffreiheit für den Fahrer bzw. die Passagiere optimiert werden kann. Auch wird durch die erfindungsgemäßen Maßnahmen ein optisch ansprechendes äußeres Erscheinungsbild der Innenschale erzielt, weil die an der Innenschale aus Funktionsgründen vorzusehenden Klappen in ihrer Nichtgebrauchslage die für die Fahrzeuginsassen sichtbare Oberfläche der Innenschale nicht in unter'Designgesichtspunkten unerwünschter Weise "zerklüften". Ein weiterer Vorteil ist darin zu sehen, daß der Umstand, daß die Klappe als Teil der Innenschale ausgebildet ist, den Gesamtaufbau vereinfacht, wobei einem Teil, das zur Ausbildung der Innenraumverkleidung des Fahrzeugs ohnehin vorzusehen ist, nämlich der Innenschale, mindestens eine weitere Funktion zugeordnet wird. Nicht zuletzt im Hinblick auf das Gesamtgewicht des entsprechenden Karosserieteils ist die erfindungsgemäße Lösung als vorteilhaft zu bewerten: Dadurch, daß die Klappe als Teil der Innenschale ausgebildet ist, wird für die Klappe als solche kein zusätzliches, das Gesamtgewicht erhöhendes Teil benötigt, wie etwa bei herkömmlichen Sonnenblendenanordnungen.

Nach der Lehre des Patentanspruchs 2 ist die Klappe zweckmäßig an einem Rand über ein Scharnier mit der Innenschale verbunden. Liegt dabei das Scharnier in Fahrtrichtung des Fahrzeugs gesehen vor der als Sonnenblende dienenden Klappe, wie im Patentanspruch 3 angegeben, so hat dies den Vorteil, daß, wenn der Fahrer die Klappe zur Abschattung des Fahrzeuginnenraums aus ihrer Nichtgebrauchslage herunterschwenkt, die Klappe den Blinkwinkel kontinuierlich verengt. Bei einer konventionellen Anordnung des Scharniers hingegen, bei der das Scharnier in Fahrtrichtung des Fahrzeugs gesehen hinter der als Sonnenblende dienenden Klappe liegt, kommt es bei der Schwenkbewegung der Klappe von ihrer Nichtgebrauchslage in ihre Gebrauchslage kurzfristig neben einer Einschränkung der Kopffreiheit auch zu einer extremen Verengung des Blickwinkels, während der es für den Fahrer schwierig ist, das Verkehrsgeschehen zu beobachten, und die mithin zu gefahrenträchtigen Situationen führen kann. Der Patentanspruch 4 sieht hier weiterhin in einer fertigungstechnisch günstigen Ausgestaltung vor, daß die Klappe einstückig mit der Innenschale geformt ist, wobei das Scharnier in vorteilhaft einfacher Weise durch einen in der Dicke reduzierten Abschnitt der Innenschale ausgebildet ist.

Entsprechend dem Patentanspruch 5 weist die Klappe sich an den Scharnierrand anschließende Seitenränder auf, die in der Nichtgebrauchslage der Klappe von benachbarten Rändern der Innenschale durch Trennfugen getrennt sind, welche sich vorteilhaft einfach ausbilden lassen. Hierbei ist es grundsätzlich möglich, daß die Trennfugen in einem mittleren Bereich der Innenschale, d.h. vom Rand der Innenschale entfernt in deren Fläche ausgebildet werden. Fertigungstechnisch einfacher und zumindest insofern bevorzugt ist es jedoch, wenn, wie im Patentanspruch 6 angegeben, sich die Trennfugen ausgehend von einem Ende der Innenschale, also von deren Rand zum Inneren der Innenschale erstrecken.

Nach der Lehre des Patentanspruchs 7 ist eine Führungseinrichtung für die Schwenkbewegung der Klappe vorgesehen, die komplementär ineinandergreifende, die Führung bewirkende Kreisbogenabschnitte aufweist, welche bezüglich einer Schwenkachse der Klappe zentriert angeordnet sind. Eine solche Führungseinrichtung sorgt zum einen für ein gutes Betätigungsgefühl, wenn die Klappe aus ihrer Nichtgebrauchslage herausgeschwenkt wird, weil die Klappe nicht nur über das Scharnier gehalten wird. Zum anderen läßt sich durch geeignete Wahl des Passungsspiels zwischen den Kreisbogenabschnitten der Führungseinrichtung eine gewisse Schwergängigkeit der Schwenkbewegung erzielen, die es den jeweiligen Erfordernissen entsprechend ermöglicht, die Klappe auch in Zwischenstellungen zwischen ihrer Nichtgebrauchslage und ihrer Gebrauchslage loszulassen, ohne daß sich die Klappe etwa infolge ihres Eigengewichts aus dieser Zwischenstellung wegbewegt. Zweckmäßig ist hierbei, wie im Patentanspruch 8 angegeben, der eine Kreisbogenabschnitt durch eine an der Klappe angeschäumte Lagerschale ausgebildet, während der andere Kreisbogenabschnitt durch eine der Klappe benachbart an der Innenschale angeschäumte Lagerschale ausgebildet ist, wobei eine der Lagerschalen einen kreisbogenförmigen Schlitz aufweist, der ein kreisbogenförmiges Ende der anderen Lagerschale verschiebbar aufnimmt.

Des weiteren kann entsprechend dem Patentanspruch 9 eine Halteeinrichtung zur lösbaren Fixierung der Klappe in ihrer Nichtgebrauchslage und/oder ihrer Gebrauchslage vorgesehen sein, mit einer der Nichtgebrauchslage bzw. Gebrauchslage zugeordneten, bezüglich eines nicht bewegbaren Teils der Innenschale ortsfesten Rastnut, in die eine der Klappe zugeordnete Rastnase einrastbar ist. Eine solche Halteeinrichtung kann den jeweiligen Erfordernissen entsprechend für eine zusätzliche Fixierung der Klappe in ihrer jeweiligen Endlage sorgen, so daß etwa bei einer relativ langen Klappe, die im Fahrbetrieb des Kraftfahrzeugs eher zum Schwingen neigt, sich diese nicht unbeabsichtigt aus ihrer jeweiligen Endlage wegbewegen kann. Zweckmäßig sind hierbei, wie im Patentanspruch 10 angegeben, die Rastnuten am kreisbogenförmigen Schlitz der einen Lagerschale ausgebildet, während die Rastnase am kreisbogenförmigen Ende der anderen Lagerschale ausgebildet ist. Denkbar - wenngleich weniger bevorzugt - wäre aber auch die umgekehrte Anordnung mit Rastnasen am kreisbogenförmigen Schlitz der einen Lagerschale und'einer Rastnut am kreisbogenförmigen Ende der anderen Lagerschale. Ebenso könnten den jeweiligen Erfordernissen entsprechend auch Rastzwischenstellungen vorgesehen sein, wozu eine geeignete Anzahl von Rastnuten bzw. -nasen an dem jeweiligen Kreisbogenabschnitt zwischen den Rastendstellungen, die der Nichtgebrauchslage bzw. Gebrauchslage der Klappe zugeordnet sind, vorzusehen wäre. Des weiteren wäre anstelle oder zusätzlich zu der eben beschriebenen Halteeinrichtung eine Verrastung der Klappe in ihrer Nichtgebrauchslage mittels eines Clips, einer Haltefeder, einer Rastnase od. dergl. am freien, d.h. nicht scharnierten Ende der Klappe denkbar, die mit einem bezüglich der Innenschale bzw. Karosserie ortsfesten Gegenstück verrastet werden kann.

Gemäß dem Patentanspruch 11 sind zwischen den Seitenrändern der Klappe und den diesen benachbarten Rändern der Innenschale flexible Seitenwandabschnitte vorgesehen, die durch Bewegen der Klappe aus ihrer Nichtgebrauchslage in ihre Gebrauchslage zu einem im wesentlichen dreieckigen Flächengebilde aufspannbar sind. Beim Einsatz der so weitergebildeten Klappe als Sonnenblende an einem Fahrzeugdach bzw. -modul verhindern diese Seitenwandabschnitte in der Gebrauchslage der Klappe in vorteilhafter Weise einen seitlichen Einfall des Sonnenlichts in den Fahrzeuginnenraum, d.h. einen Einfall des Sonnenlichts durch den im wesentlichen dreieckigen Öffnungsbereich, der sich in der Gebrauchslage der Klappe ausgehend vom Scharnier in Höhenrichtung des Fahrzeugs zwischen dem jeweiligen Seitenrand der Klappe und dem diesen benachbarten Rand der Innenschale erstreckt. In einer vorteilhaft einfachen Ausgestaltung können diese flexiblen Seitenwandabschnitte durch ein Bezugsmaterial ausgebildet sein, das auf der dem Fahrzeuginnenraum zugewandten Fläche der Innenschale ohnehin vorgesehen ist, wie im Patentanspruch 12 angegeben.

Nach der Lehre des Patentanspruchs 13 ist die Klappe mittels mindestens eines Federelements in die Nichtgebrauchslage vorgespannt, das anstelle oder zusätzlich zu der weiter oben angesprochenen Führungs- bzw. Halteeinrichtung vorgesehen sein kann. Das Federelement ist zum einen einem guten Betätigungsgefühl beim Herunter- bzw. Herausschwenken der Klappe förderlich, weil das Federelement hierbei für einen definierten Betätigungswiderstand sorgt. Beim Hoch- bzw. Hineinschwenken der Klappe unterstützt das Federelement in vorteilhafter Weise die Bedienperson bei der Schwenkbewegung. Zum anderen sorgt das Federelement für eine definierte Endstellung der Klappe in der Nichtgebrauchslage, aus der sich die Klappe infolge der Federvorspannung auch nicht selbsttätig bzw. in unbeabsichtigter Weise wegbewegen kann.

Gemäß einer im Patentanspruch 14 angegebenen, vorteilhaften Weiterbildung einer solchen Federeinrichtung sind zwei Federelemente vorgesehen, die jeweils an einem der flexiblen Seitenwandabschnitte angreifen, wobei die Federelemente die Seitenwandabschnitte und somit die Klappe mittelbar in die Nichtgebrauchslage vorspannen. Die Federelemente sorgen hier also in vorteilhafter Weise auch dafür, daß die flexiblen Seitenwandabschnitte eine definierte Endstellung einnehmen, wenn sich die Klappe in ihrer Nichtgebrauchslage befindet. Mit anderen Worten gesagt ziehen die Federelemente bei einer Bewegung der Klappe von der Gebrauchslage in die Nichtgebrauchslage die flexiblen Seitenwandabschnitte von den Trennfugen zwischen den Seitenrändern der Klappe und den benachbarten Rändern der Innenschale weg, so daß die Seitenwandabschnitte nicht in den Trennfugen beschädigt werden können bzw. dort die Schwenkbewegung der Klappe behindern können. Zweckmäßig handelt es sich bei den Federelementen um abgewinkelte Drahtabschnitte, wie im Patentanspruch 15 angegeben, mit jeweils einem ersten Schenkel, der im wesentlichen mittig am jeweiligen Seitenwandabschnitt fixiert ist, und einem zweiten Schenkel, dessen freies Ende drehbar in einem Lagerbock gelagert ist, welcher der Klappe benachbart an der Innenschale angeschäumt ist. Sind sowohl Federelemente als auch die weiter oben angesprochene Führungseinrichtung vorgesehen, so können entsprechend dem Patentanspruch 16 der Lagerbock für das jeweilige Federelement und die der Klappe benachbart an der Innenschale angeschäumte Lagerschale der Führungseinrichtung in vorteilhaft einfacher Weise einstückig ausgebildet sein.

Der Patentanspruch 17 sieht vor, daß einstückig mit der Klappe eine Griffmulde ausgebildet ist, an der die Bedienperson angreifen kann, um die Klappe aus der Nichtgebrauchslage in die Gebrauchslage bzw. umgekehrt zu bewegen. Infolge der einstückigen Ausbildung der Griffmulde mit der Klappe erübrigen sich hier weitere Teile wie Griffschalen und die damit verbundenen, zusätzlichen Montageschritte.

Es ist schließlich grundsätzlich möglich, die beschriebene Innenschale schon bei ihrer Formung aus einem Schaumkunststoff mit einem Modulteil zu vereinigen, etwa durch Anschäumen der Innenschale an das Modulteil entsprechend dem Patentanspruch 18. Dies schließt indes nicht aus, die Innenschale für bestimmte Anwendungen separat herzustellen und erst später am jeweiligen Karosserieteil mit geeigneten Befestigungsmitteln zu fixieren. Hierfür geeignete Befestigungsmittel werden z.B. in der DE 199 47 238 A1 der Anmelderin sowie in der älteren deutschen Patentanmeldung 101 16 593.5 der Anmelderin beschrieben, auf die diesbezüglich Bezug genommen wird.

Im folgenden wird die Erfindung anhand eines Ausführungsbeispiels unter Bezugnahme auf die beigefügten, teilweise schematischen Zeichnungen näher erläutert. Darin zeigen:
- Fig. 1: eine abgebrochene Perspektivansicht einer Innenschale eines an einem Fahrzeug montierten Fahrzeugdachmoduls vom Fahrzeuginnenraum aus gesehen, mit daran vorgesehenen, als Sonnenblenden dienenden Klappen, die sich in ihrer Nichtgebrauchslage befinden,
- Fig. 2: eine hinsichtlich Blinkwinkel und Ausschnitt der Darstellung in Fig. 1 entsprechende, abgebrochene Perspektivansicht der Innenschale gemäß Fig. 1, wobei sich die als Sonnenblenden dienenden Klappen in ihrer Gebrauchslage befinden,
- Fig. 3: eine der Darstellung in Fig. 1 entsprechende, abgebrochene Perspektivansicht der Innenschale gemäß Fig. 1, wobei den Klappen zugeordnete Federelemente, Seitenwandabschnitte sowie Führungs- und Halteeinrichtungen, die vom Fahrzeuginnenraum aus nicht zu sehen sind, d.h. verdeckt liegen, gestrichelt angedeutet sind,
- Fig. 4: einen abgebrochenen Schnitt durch das an einem vorderen Querholm eines Karosserierahmens des Fahrzeugs befestigte Fahrzeugdachmodul gemäß Fig. 1 entsprechend der versetzten Schnittverlaufslinie IV-IV in Fig. 3, wobei sich die geschnittene, als Sonnenblende dienende Klappe in ihrer Nichtgebrauchslage befindet,
- Fig. 5: einen hinsichtlich des Schnittverlaufs der Fig. 4 entsprechenden, abgebrochenen Schnitt durch das Fahrzeugdachmodul gemäß Fig. 1, wobei sich die geschnittene, als Sonnenblende dienende Klappe in ihrer Gebrauchslage befindet, und
- Fig. 6: einen abgebrochenen Schnitt durch das Fahrzeugdachmodul gemäß Fig. 1 im Bereich eines Seitenwandabschnitts und eines Federelements, die der dargestellten Klappe zugeordnet sind, entsprechend der Schnittverlaufslinie VI-VI in Fig. 3.

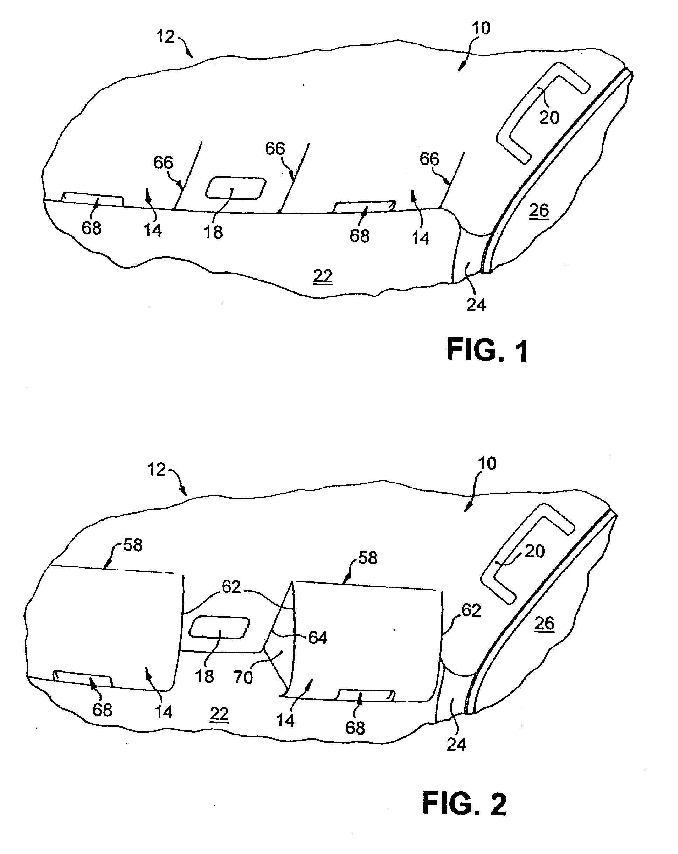

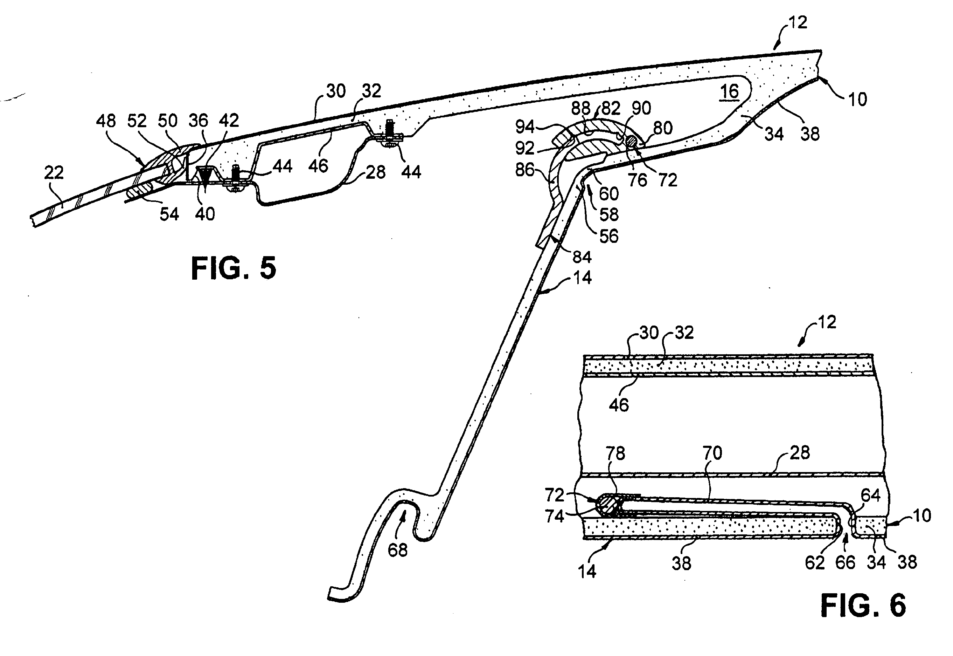

Die Figuren zeigen eine aus einem Schaumkunststoff geformte Innenschale 10 für ein Fahrzeugdachmodul 12 als Beispiel für ein Modulteil an Fahrzeugkarosserien, wobei der Innenschale 10 wenigstens eine, im dargestellten Ausführungsbeispiel zwei Klappen 14 zugeordnet sind, die wahlweise von einer in den Fig. 1, 3, 4 und 6 gezeigten Nichtgebrauchslage in eine in den Fig. 2 und 5 gezeigte Gebrauchslage und umgekehrt bewegt werden können. Die Klappen 14 dienen im dargestellten Ausführungsbeispiel als Sonnenblenden, können statt dessen oder zusätzlich aber auch den Zugang zu einem Funktionselement (nicht dargestellt) und/oder einem Hohlraum 16 des Fahrzeugdachmoduls 12 ermöglichen. Wesentlich ist, daß die Klappen 14 als Teil der Innenschale 10 ausgebildet sind und in ihrer Nichtgebrauchslage im wesentlichen oberflächenbündig mit den an die jeweilige Klappe 14 angrenzenden Bereichen der Innenschale 10 abschließen, wie insbesondere die Fig. 1, 4 und 6 zeigen.

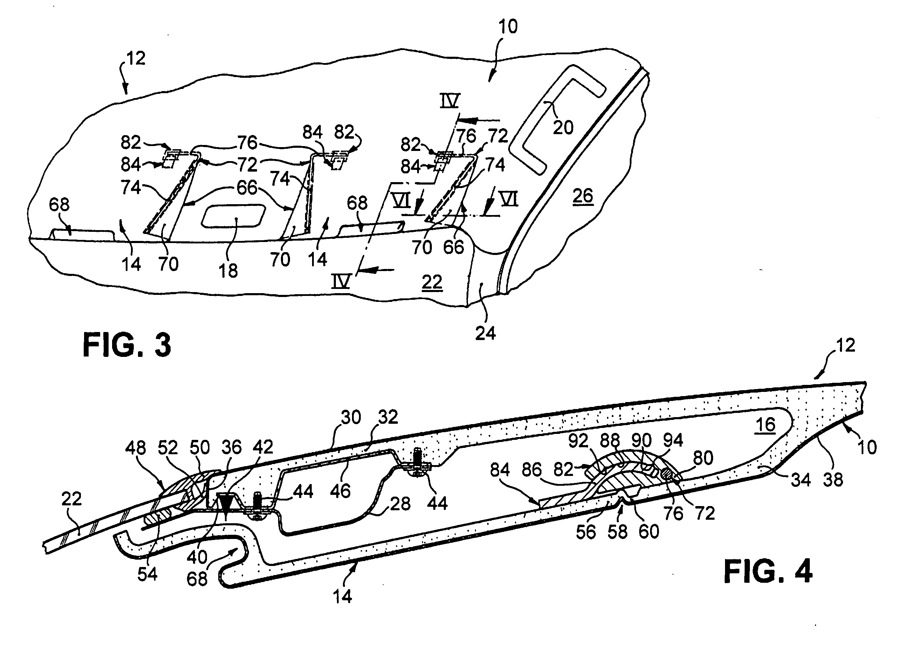

Gemäß den Fig. 1 bis 3 umfaßt das Fahrzeugdachmodul 12 neben der Innenschale 10 mit den Klappen 14 u.a. eine zentral angeordnete Innenraumleuchte 18, die in die Innenschale 10 eingelassen ist und im wesentlichen bündig mit dieser abschließt, sowie an jeder seiner beiden Seiten angeordnete Haltegriffe 20, die sich an bequem erreichbaren Anbringungsorten für die Fahrzeuginsassen befinden. Das Fahrzeugdachmodul 12 ist in den Figuren in einem bereits am Karosserierahmen des Fahrzeugs montierten Zustand gezeigt, wobei von dem Fahrzeug die Windschutzscheibe 22, die A-Säule 24 sowie eine Seitenscheibe 26 in den Fig. 1 bis 3 zu erkennen sind. Ein vorderes Querteil des Karosserierahmens ist in den Fig. 4 bis 6 mit 28 bezeichnet.

Wie des weiteren insbesondere den Fig. 4 und 5 entnommen werden kann, ist die Innenschale 10 des Fahrzeugdachmoduls 12 aus einem Schaumkunststoff geformt, der bei dem gezeigten Ausführungsbeispiel auf eine starre Dachhaut 30 aufgeschäumt ist. Mit anderen Worten gesagt ist die Innenschale 10 an das Fahrzeugdachmodul 12 angeschäumt. Die starre Dachhaut 30 besteht aus einem tiefgezogenen Metallblech, beispielsweise Aluminiumblech, oder kann aus einer vakuumverformten Kunststoffolie gebildet sein. Die Fig. 4 und 5 zeigen ferner, daß die Innenschale 10 im Bereich der zur Auflage auf den Karosserierahmen vorgesehenen Außenränder des Fahrzeugdachmoduls 12 in zwei Schichten 32, 34 aufgeteilt ist, von denen die obere Schicht 32 auf den Karosserierahmen aufgelegt ist, während die untere Schicht 34 einstückig mit den Klappen 14 ausgebildet ist, wie noch näher beschrieben werden wird, und auch zur Verkleidung des Karosserierahmens dient. Es wurde bereits eingangs erwähnt, daß die Innenschale 10 grundsätzlich auch separat vom jeweiligen Karosserieteil hergestellt und sodann nachträglich mit Hilfe von geeigneten Befestigungsmitteln am jeweiligen Karosserieteil ggf. auch lösbar befestigt werden kann.

Geeignete Werkstoffe für die Innenschale 10 sind Hartschaumkunststoffe auf PUR-Basis, die durch dem Kunststoff vor dem Aufschäumen einverleibte Faserstoffe, beispielsweise Glasfaserabschnitte, armiert sein können. Aber auch in die Schäumform eingelegte Gewebe, Gewirke, Vliese und dergleichen sind als Armierung geeignet. Durch das Aufschäumen der armierten Innenschale 10, deren obere Schicht 32 gemäß den Fig. 4 und 5 bis zu einer Randabkantung 36 der Dachhaut 30 reicht, entsteht ein sandwichartiges Verbunddachmodul hoher Formbeständigkeit und Festigkeit. Alle Konturen der Innenschale 10 einschließlich der unteren Schicht 34 und ihrer Profilierungen werden durch entsprechende Formgebung der Schäumform (nicht dargestellt) gebildet.

Die dem Fahrzeuginnenraum zugewandte Innenfläche der Innenschale 10 ist im dargestellten Ausführungsbeispiel zur Ausbildung eines Dachhimmels mit einem Bezugsmaterial 38 beschichtet, welches ausreichend flexibel ist, um sich der Innenfläche der Innenschale 10 anzupassen. Durch das Bezugsmaterial 38 kann die Innenschale 10 den jeweiligen Erfordernissen entsprechend leicht hinsichtlich des äußeren Erscheinungsbilds (Farbe, Material) der sonstigen Innenausstattung des Fahrzeugs angepaßt werden. So kann das Bezugsmaterial 38 aus einem textilen Flächengebilde, Leder, einem Leder- oder Velourslederimitat oder einer dekorativen Kunststoffolie bestehen, je nach den jeweiligen Design-Wünschen.

Im Bereich der Auflage auf den Karosserierahmen ist die obere Schicht 32 der Innenschale 10 mit umlaufend eingeformten Aufnahmenuten 40 versehen, in welchen das Fahrzeugdachmodul 12 gegenüber dem Karosserierahmen abdichtende, in den Fig. 4 und 5 lediglich schematisch dargestellte Kleberaupen 42 aufgenommen sind, die auch der Befestigung des Fahrzeugdachmoduls 12 am Karosserierahmen dienen. Den Hauptanteil der Befestigung übernehmen im dargestellten Ausführungsbeispiel jedoch zumindest am in Fahrtrichtung vorderen Rand des Fahrzeugdachmoduls 12 vorgesehene Befestigungsschrauben 44, welche zugeordnete Befestigungslöcher im vorderen Querteil 28 des Karosserierahmens von unten durchgreifen und in Gewindebohrungen eingeschraubt sind, die in einem der oberen Schicht 32 angeschäumten Metallprofil 46 ausgebildet sind. Aus Fig. 5 ist ersichtlich, daß die Befestigungsschrauben 44 vom Fahrzeuginnenraum aus leicht zugänglich sind, wenn sich die Klappen 14 in ihrer Gebrauchslage befinden.

Wie den Fig. 4 und 5 des weiteren zu entnehmen ist, ist auf einen Rand der Windschutzscheibe 22 ein elastomeres Dichtprofil 48 aufgesteckt, welches mit einer vorspringenden Außenlippe 50 abdichtend der Außenfläche der Dachhaut 30 anliegt, während eine vorspringende Innenlippe 52 des Dichtprofils 48 abdichtend der Randabkantung 36 der Dachhaut 30 anliegt. Zwischen der Windschutzscheibe 22 und einem nach außen vorspringenden Flansch des vorderen Querteils 28 des Karosserierahmens übernimmt eine weitere Kleberaupe 54 die Befestigung und Abdichtung der Windschutzscheibe 22 an bzw. gegenüber der Fahrzeugkarosserie.

Gemäß den Fig. 4 und 5 ist die hier einstückig mit der unteren Schicht 34 der Innenschale 10 geformte Klappe 14 an ihrem in den Fig. 4 und 5 rechten bzw. oberen Rand 56 über ein Scharnier 58 gelenkig mit dem in diesen Figuren rechten Teil der unteren Schicht 34 der Innenschale 10 verbunden. Das bei dem dargestellten Ausführungsbeispiel in Fahrtrichtung des Fahrzeugs gesehen vor der als Sonnenblende dienenden Klappe 14 liegende Scharnier 58 ist hierbei in der Art eines Filmscharniers durch einen in der Dicke reduzierten Abschnitt 60 der unteren Schicht 34 der Innenschale 10 ausgebildet. Ein solcher in der Dicke reduzierter Abschnitt 60 läßt sich leicht durch entsprechende Vorsprünge in der Schäumform (nicht dargestellt) erzeugen. Die sich an den Scharnierrand 56 anschließenden Seitenränder 62 der Klappe 14 sind, wie insbesondere die Fig. 6 zeigt, in der Nichtgebrauchslage der Klappe 14 von benachbarten Rändern 64 der unteren Schicht 34 der Innenschale 10 durch Trennfugen 66 getrennt. Auch die sich ausgehend vom freien Ende der Innenschale 10 bzw. unteren Schicht 34 bis zum Scharnier 58 erstreckenden Trennfugen 66 lassen sich leicht durch geeignete Vorsprünge in der Schäumform (nicht dargestellt) ausbilden. Entsprechendes gilt für eine einstückig mit der Klappe 14 ausgebildete Griffmulde 68, die sich am freien Ende der jeweiligen Klappe 14 befindet.

Wie den Fig. 2 und 6 zu entnehmen ist, sind zwischen den Seitenrändern 62 der Klappe 14 und den diesen benachbarten Rändern 64 der unteren Schicht 34 der Innenschale 10 flexible Seitenwandabschnitte 70 vorgesehen, die durch Bewegen der Klappe 14 aus ihrer Nichtgebrauchslage in ihre Gebrauchslage jeweils zu einem gemäß Fig. 2 im wesentlichen dreieckigen Flächengebilde aufgespannt werden können, das für eine zusätzliche Abschattung des Fahrzeuginnenraums sorgt bzw. einen seitlichen Einblick in den Hohlraum 16 verhindert. Im dargestellten Ausführungsbeispiel sind die Seitenwandabschnitte 70 auch durch das auf der dem Fahrzeuginnenraum zugewandten Fläche der Innenschale 10' vorgesehene Bezugsmaterial 38 ausgebildet. Denkbar wäre hier aber auch eine Ausgestaltung, bei der die Seitenwandabschnitte 70 durch zusätzliche Stoff- bzw. Folienabschnitte ausgebildet werden, die an den Seitenrändern 62 der jeweiligen Klappe 14 und den diesen gegenüberliegenden Rändern 64 der unteren Schicht 34 geeignet befestigt sind, etwa mittels eines Klebstoffs.

Wie die Fig. 3 bis 6 veranschaulichen, ist auf der vom Fahrzeuginnenraum abgewandten Seite jeder Klappe 14 in der Nähe jedes Klappenseitenrands 62 ein Federelement 72 vorgesehen, so daß jeder Klappe 14 zwei Federelemente 72 zugeordnet sind. Die Federelemente 72 greifen jeweils an einem der Seitenwandabschnitte 70 an, wodurch die Federelemente 72 die Seitenwandabschnitte 70 und somit auch die jeweilige Klappe 14 in die Nichtgebrauchslage vorspannen. Genauer gesagt handelt es sich im dargestellten Ausführungsbeispiel bei den Federelementen 72 um einfach abgewinkelte Drahtabschnitte, die jeweils einen längeren ersten Schenkel 74 und einen kürzeren zweiten Schenkel 76 aufweisen. Der erste Schenkel 74 des Federelements 72 ist gemäß den Fig. 3 und 6 im wesentlichen mittig am jeweiligen Seitenwandabschnitt 70 mittels wenigstens einer Stoffschlaufe 78 fixiert, die den ersten Schenkel 74 umschlingt und auf geeignete Weise, etwa durch Kleben und/oder Nähen am jeweiligen Seitenwandabschnitt 70 befestigt ist. Das freie Ende des zweiten Schenkels 76 des Federelements 72 hingegen ist gemäß den Fig. 4 und 5 drehbar in einem Lagerbock 80 gelagert, welcher einstückig mit einer nachfolgend noch näher beschriebenen Lagerschale 82 ausgebildet ist, die der Klappe 14 benachbart auf der vom Fahrzeuginnenraum abgewandten Seite an der unteren Schicht 34 der Innenschale 10 angeschäumt ist.

Es ist ersichtlich, daß die Federelemente 72 bei einem Verschwenken der Klappe 14 aus ihrer Nichtgebrauchslage in ihre Gebrauchslage über die sich aufspannenden Seitenwandabschnitte 70, die dabei an den ersten Schenkeln 74 der Federelemente 72 über die Stoffschlaufen 78 ziehen, bezogen auf die jeweilige Klappe 14 nach außen aufgefedert werden. Wird die Klappe 14 aus ihrer Gebrauchslage wieder in ihre Nichtgebrauchslage zurückgeschwenkt, so unterstützen die dabei zurückfedernden Federelemente 72 die Schwenkbewegung, in dem deren erste Schenkel 74 über die Stoffschlaufen 78 an den Seitenwandabschnitten 70 und somit der Klappe 14 ziehen, wobei die Seitenwandabschnitte 70 auch von den Trennfugen 66 bezogen auf die jeweilige Klappe 14 nach innen weggezogen werden. In der Nichtgebrauchslage der Klappe 14 kommen die Seitenwandabschnitte 70 und die Federelemente 72 sodann unmittelbar oberhalb der Klappe 14 zu liegen, wie die Fig. 6 zeigt. Zwar liegen im dargestellten Ausführungsbeispiel das Scharnier 58 und die zueinander ausgefluchteten Drehachsen der zweiten Schenkel 76 der Federelemente 72 im jeweils zugeordneten Lagerbock 80 nicht auf einer gemeinsamen Achse. Bei der Schwenkbewegung der Klappe 14 sind jedoch ggf. Ausgleichsbewegungen der beteiligten Teile infolge einer gewissen Nachgiebigkeit des Scharniers 58 und der Elastizität der Federelemente 72 möglich.

Weiterhin ist bei dem dargestellten Ausführungsbeispiel eine in den Fig. 4 und 5 gezeigte Führungseinrichtung für die Schwenkbewegung der jeweiligen Klappe 14 vorgesehen, die komplementär ineinandergreifende, die Führung der Klappe 14 bewirkende Kreisbogenabschnitte aufweist, welche bezüglich der Schwenkachse der Klappe 14 zentriert angeordnet sind. Genauer gesagt ist zu beiden Querseiten der jeweiligen Klappe 14 eine Lagerschale 84 dem Scharnier 58 benachbart auf der vom Fahrzeuginnenraum abgewandten Seite der Klappe 14 an der Klappe 14 angeschäumt, wobei sich von jeder Lagerschale 84 ein kreisbogenförmiges Ende 86 wegerstreckt, welches jeweils einen der erwähnten Kreisbogenabschnitte ausbildet. Die anderen Kreisbogenabschnitte werden durch kreisbogenförmige Schlitze 88 ausgebildet, die in den der jeweiligen Klappe 14 benachbart an der unteren Schicht 34 der Innenschale 10 angeschäumten Lagerschalen 82 vorgesehen sind. Wie die Fig. 4 und 5 veranschaulichen, sind die kreisbogenförmigen Enden 86 der klappenseitigen Lagerschalen 84 verschiebbar und im wesentlichen radialspielfrei in den kreisbogenförmigen Schlitzen 88 der innenschalenseitigen Lagerschalen 82 aufgenommen.

Die vorzugsweise aus einem geeigneten Kunststoff bestehenden Lagerschalen 82, 84 bilden zudem auch eine Halteeinrichtung zur lösbaren Fixierung der jeweiligen Klappe 14 in ihrer Nichtgebrauchslage bzw. ihrer Gebrauchslage aus, wie abschließend beschrieben werden soll. Diese Halteeinrichtung weist zu beiden Querseiten der entsprechenden Klappe 14 jeweils zwei Rastnuten 90, 92 auf, von denen die eine Rastnut 90 der Nichtgebrauchslage der Klappe 14 (Fig. 4) zugeordnet ist, während die andere Rastnut 92 der Gebrauchslage der Klappe 14 (Fig. 5) zugeordnet ist. Wie die Fig. 4 und 5 des weiteren zeigen, sind die Rastnuten 90, 92 geeignet winkelbeabstandet am kreisbogenförmigen Schlitz 88 der jeweiligen Lagerschale 82 ausgebildet, d.h. die Rastnuten 90, 92 sind im dargestellten Ausführungsbeispiel bezüglich des nicht bewegbaren Teils der Innenschale 10 ortsfest. Schließlich hat die Halteeinrichtung zu beiden Querseiten der entsprechenden Klappe 14 auch jeweils eine in die Rastnuten 90, 92 am kreisbogenförmigen Schlitz 88 der jeweiligen Lagerschale 82 einrastbare Rastnase 94, die endseitig am kreisbogenförmigen Ende 86 der entsprechenden Lagerschale 84 ausgebildet, d.h. der jeweiligen Klappe 14 zugeordnet ist.

Es ist ersichtlich, daß die beschriebene Führungseinrichtung eine geführte bzw. definierte Schwenkbewegung um die Schwenkachse der jeweiligen Klappe 14 gestattet, während sie Winkelbewegungen der Klappe 14 in der Klappenebene ebenso wie translatorische Höhenbewegungen der Klappe 14 im wesentlichen verhindert. Translatorische Querbewegungen der Klappe 14 hingegen werden im wesentlichen durch das Scharnier 58 verhindert. Die beschriebene Halteeinrichtung sorgt dabei für definierte Endstellungen der jeweiligen Klappe 14 in ihrer Nichtgebrauchslage bzw. ihrer Gebrauchslage, wobei die Halteeinrichtung die Klappe 14 in ihrer Gebrauchslage auch gegen die Kraft der Federelemente 72 hält.

Es wurde bereits eingangs erwähnt, daß den jeweiligen Erfordernissen entsprechend anstelle oder zusätzlich zu der beschriebenen Halteeinrichtung eine Verrastung der Klappe 14 in ihrer Nichtgebrauchslage mittels eines Clips, einer Haltefeder, einer Rastnase od. dergl. (nicht dargestellt) am freien, d.h. nicht scharnierten, in Fig. 4 linken Ende der Klappe 14 möglichst ist, die mit einem bezüglich der Innenschale 10 bzw. der Karosserie ortsfesten Gegenstück, z.B. einer Rastnut (nicht dargestellt) oder einem Blechvorsprung des vorderen Querteils 28 verrastet werden kann.

Es wird eine aus einem Schaumkunststoff geformte Innenschale für Fahrzeugkarosserien, insbesondere ein Fahrzeugdach oder Fahrzeugdachmodul, offenbart, der wenigstens eine Klappe zugeordnet ist, die wahlweise von einer Nichtgebrauchslage in eine Gebrauchslage und umgekehrt bewegbar ist. Vorzugsweise dient die Klappe als Sonnenblende und/oder ermöglicht den Zugang zu einem Funktionselement und/oder Hohlraum. Erfindungsgemäß ist die Klappe als Teil der Innenschale ausgebildet und schließt in ihrer Nichtgebrauchslage im wesentlichen oberflächenbündig mit den an die Klappe angrenzenden Bereichen der Innenschale ab. Im Ergebnis wird eine u.a. sehr platzsparende Ausbildung der Klappenanordnung erzielt.

### Bezugszeichenliste

- 10: Innenschale
- 12: Fahrzeugdachmodul
- 14: Klappe
- 16: Hohlraum
- 18: Innenraumleuchte
- 20: Haltegriff
- 22: Windschutzscheibe
- 24: A-Säule
- 26: Seitenscheibe
- 28: vorderes Querteil
- 30: Dachhaut
- 32: obere Schicht
- 34: untere Schicht
- 36: Randabkantung
- 38: Bezugsmaterial
- 40: Aufnahmenut
- 42: Kleberaupe
- 44: Befestigungsschraube
- 46: Metallprofil
- 48: Dichtprofil
- 50: Außenlippe
- 52: Innenlippe
- 54: Kleberaupe
- 56: Scharnierrand
- 58: Scharnier
- 60: verjüngter Abschnitt
- 62: Seitenrand
- 64: Rand
- 66: Trennfuge
- 68: Griffmulde
- 70: Seitenwandabschnitt
- 72: Federelement
- 74: erster Schenkel
- 76: zweiter Schenkel
- 78: Stoffschlaufe
- 80: Lagerbock
- 82: Lagerschale
- 84: Lagerschale
- 86: kreisbogenförmiges Ende
- 88: kreisbogenförmiger Schlitz
- 90: Rastnut
- 92: Rastnut
- 94: Rastnase

## Patentansprüche

1. Aus einem Schaumkunststoff geformte Innenschale (10) für Fahrzeugkarosserien, insbesondere ein Fahrzeugdach oder Fahrzeugdachmodul (12), der wenigstens eine Klappe (14) zugeordnet ist, die wahlweise von einer Nichtgebrauchslage (Fig. 1, 3, 4, 6) in eine Gebrauchslage (Fig. 2, 5) und umgekehrt bewegbar ist, wobei die Klappe (14) vorzugsweise als Sonnenblende dient und/oder den Zugang zu einem Funktionselement (44) und/oder Hohlraum (16) ermöglicht, **dadurch gekennzeichnet, daß** die Klappe (14) als Teil der Innenschale (10) ausgebildet ist und in ihrer Nichtgebrauchslage im wesentlichen oberflächenbündig mit den an die Klappe (14) angrenzenden Bereichen der Innenschale (10) abschließt.

2. Innenschale (10) nach Anspruch 1, **dadurch gekennzeichnet, daß** die Klappe (14) an einem Rand (56) über ein Scharnier (58) mit der Innenschale (10) verbunden ist.

3. Innenschale (10) nach Anspruch 2, **dadurch gekennzeichnet, daß** das Scharnier (58) in Fahrtrichtung des Fahrzeugs gesehen vor der als Sonnenblende dienenden Klappe (14) liegt.

4. Innenschale (10) nach Anspruch 2 oder 3, **dadurch gekennzeichnet, daß** die Klappe (14) einstückig mit der Innenschale (10) geformt ist, wobei das Scharnier (58) durch einen in der Dicke reduzierten Abschnitt (60) der Innenschale (10) ausgebildet ist.

5. Innenschale (10) nach Anspruch 4, **dadurch gekennzeichnet, daß** die Klappe (14) sich an den Scharnierrand (56) anschließende Seitenränder (62) aufweist, die in der Nichtgebrauchslage der Klappe (14) von benachbarten Rändern (64) der Innenschale (10) durch Trennfugen (66) getrennt sind.

6. Innenschale (10) nach Anspruch 5, **dadurch gekennzeichnet, daß** sich die Trennfugen (66) ausgehend von einem Ende der Innenschale (10) erstrecken.

7. Innenschale (10) nach einem der vorhergehenden Ansprüche, **gekennzeichnet durch** eine Führungseinrichtung für eine Schwenkbewegung der Klappe (14), die komplementär ineinandergreifende, die Führung bewirkende Kreisbogenabschnitte (86, 88) aufweist, welche bezüglich einer Schwenkachse der Klappe (14) zentriert angeordnet sind.

8. Innenschale (10) nach Anspruch 7, **dadurch gekennzeichnet, daß** der eine Kreisbogenabschnitt durch eine an der Klappe (14) angeschäumte Lagerschale (84) ausgebildet ist, während der andere Kreisbogenabschnitt durch eine der Klappe (14) benachbart an der Innenschale (10) angeschäumte Lagerschale (82) ausgebildet ist, wobei eine (82) der Lagerschalen (82, 84) einen kreisbogenförmigen Schlitz (88) aufweist, der ein kreisbogenförmiges Ende (86) der anderen Lagerschale (84) verschiebbar aufnimmt.

9. Innenschale (10) nach einem der vorhergehenden Ansprüche, **gekennzeichnet durch** eine Halteeinrichtung zur lösbaren Fixierung der Klappe (14) in ihrer Nichtgebrauchslage und/oder ihrer Gebrauchslage, mit einer der Nichtgebrauchslage bzw. Gebrauchslage zugeordneten, bezüglich eines nicht bewegbaren Teils der Innenschale (10) ortsfesten Rastnut (90, 92), in die eine der Klappe (14) zugeordnete Rastnase (94) einrastbar ist.

10. Innenschale (10) nach den Ansprüchen 8 und 9, **dadurch gekennzeichnet, daß** die Rastnuten (90, 92) am kreisbogenförmigen Schlitz (88) der einen Lagerschale (82) ausgebildet sind, während die Rastnase (94) am kreisbogenförmigen Ende (86) der anderen Lagerschale (84) ausgebildet ist.

11. Innenschale (10) nach einem der Ansprüche 5 bis 10, **dadurch gekennzeichnet, daß** zwischen den Seitenrändern (62) der Klappe (14) und den diesen benachbarten Rändern (64) der Innenschale (10) flexible Seitenwandabschnitte (70) vorgesehen sind, die durch Bewegen der Klappe (14) aus ihrer Nichtgebrauchslage in ihre Gebrauchslage zu einem im wesentlichen dreieckigen Flächengebilde aufspannbar sind.

12. Innenschale (10) nach Anspruch 11, **dadurch gekennzeichnet, daß** auf der einem Fahrzeuginnenraum zugewandten Fläche der Innenschale (10) ein Bezugsmaterial (38) vorgesehen ist, welches auch die flexiblen Seitenwandabschnitte (70) ausbildet.

13. Innenschale (10) nach einem der vorhergehenden Ansprüche, **dadurch gekennzeichnet, daß** die Klappe (14) mittels mindestens eines Federelements (72) in die Nichtgebrauchslage vorgespannt ist.

14. Innenschale (10) nach Anspruch 11 oder 12 und Anspruch 13, **dadurch gekennzeichnet, daß** zwei Federelemente (72) vorgesehen sind, die jeweils an einem der Seitenwandabschnitte (70) angreifen, wobei die Federelemente (72) die Seitenwandabschnitte (70) und damit die Klappe (14) in die Nichtgebrauchslage vorspannen.

15. Innenschale (10) nach Anspruch 14, **dadurch gekennzeichnet, daß** es sich bei den Federelementen (72) um abgewinkelte Drahtabschnitte handelt, mit jeweils einem ersten Schenkel (74), der im wesentlichen mittig am jeweiligen Seitenwandabschnitt (70) fixiert ist, und einem zweiten Schenkel (76), dessen freies Ende drehbar in einem Lagerbock (80) gelagert ist, welcher der Klappe (14) benachbart an der Innenschale (10) angeschäumt ist.

16. Innenschale (10) nach den Ansprüchen 8 und 15, **dadurch gekennzeichnet, daß** der Lagerbock (80) für das jeweilige Federelement (72) und die der Klappe (14) benachbart an der Innenschale (10) angeschäumte Lagerschale (82) der Führungseinrichtung einstückig ausgebildet sind.

17. Innenschale (10) nach einem der vorhergehenden Ansprüche, **dadurch gekennzeichnet, daß** einstückig mit der Klappe (14) eine Griffmulde (68) ausgebildet ist.

18. Modulteil (12) mit einer Innenschale (10) nach einem der vorhergehenden Ansprüche, **dadurch gekennzeichnet, daß** die Innenschale (10) an das Modulteil (12) angeschäumt ist.
